# EUROPEAN PATENT APPLICATION

(11) **EP 2 975 534 A1**
(43) Date of publication of application: **20.01.2016**
(21) Application number: 14002422.5
(22) Date of filing: 14.07.2014
(51) Int. Cl.: G06F 17/30, G06F 21/53, H04L 29/06, H04W 12/02

(54) **Method and device for secure browsing**

(71) Applicant: X and Me Technology AG, 8808 Freienbach (CH)
(72) Inventor: Römpp, Krishna, Churerstrasse 23 8808 Freienbach (CH)
(74) Representative: Grünecker Patent- und Rechtsanwälte PartG mbB

(57) **Abstract**

Provided is a computer implemented method for securely accessing web pages, the method comprises: transmitting from a client browser a request for retrieving a web page; receiving the request from the client browser by a server browser; gathering, by the server browser, a source code and one or more embedded objects of the requested web page, wherein the one or more embedded objects are gathered only if the web page comprises at least one or more embedded objects; rendering, by the server browser, the source code of the web page and generating a DOM, document object model, tree for creating a first visual representation of the web page, wherein the first visual representation comprises the DOM tree and said embedded objects; and transmitting said DOM tree and said embedded objects of the web page from the server browser to the client browser, so that the client browser is able to create a second visual representation of the webpage, wherein the second visual representation is substantially the same as the first visual representation.

## Description

### BACKGROUND

Browsing on web pages and surfing in the Internet entails many risks for personal computers, as well as for enterprise or private networks. Most often, web browsers are the primary attack vector into an enterprise's IT system. For example, by generating automatic attacks, criminal organizations transmit emails or other data to employees of an enterprise, where the emails comprise links to specially manipulated webpages. The purpose of such manipulated webpages is to infiltrate the user's personal computer and the internal networks with spyware, Trojans and/or other malware in order to get access to computers and data in the internal network.

JavaScript, browser extensions and multimedia codecs constitute further risks for web browsers. Such program code that is connected to the web and connected to the local resources at the same time may often not be visible to a user or an admin. Thus, admins often have to blindly trust software developers and necessary security checks of such pieces of software often are not possible or are not performed. This allows criminal organizations to systematically break into private networks, without leaving their marks.

The safety concern associated with web browsers is thus generally serious. Exploits are used so that nobody even notices an attack on the network. Further, mobile devices are used in enterprise's networks without specially secured web browsers, representing a fundamental security hole. It is very simple for professional hackers to attack enterprise networks - taking advantage of web browsers.

However, on the other hand, the web browser is an indispensable tool in the company everyday. Beside regular usage of the web and searching in the Internet, web applications are a fundamental part of a company's software stack. These days web browsers are an integral part of a company's workaday life. Thus, security solutions for online security must therefore provide appropriate arrangements for web browsers.

Mobile devices of any kind are already an important part of modern enterprise networks. A solution for secure web browsing must therefore be usable across all devices, namely desktop, mobile, tablet and others. It must be ensured, that these devices will be included in an effective browser security solution. Contemporary Browser security solutions based on terminal services are not usable on most mobile devices.

Besides the threads arising from Malware, browser fingerprinting imposes a major security risk. Web sessions can be tracked by hackers or other third parties and a trace of the user's online activities can be created. By this means information about single users and enterprises can be gathered. Information leaks through browser-tracking must be prevented due to security reasons. Secure web sessions must be anonymous, untrackable and protect the privacy of users and companies at the same time. Prevention of browser tracking constitutes an important part of web security.

### SUMMARY

The herein enclosed invention provides a solution for overcoming at least the above discussed problems in the prior art. In particular, according to one embodiment, the browser of a user is separated from the internet and another browser in a safe environment of a server gathers and renders web sites for the user. The state of that browser of the server (i.e., the visual output of a user session) may be streamed from the server to the client.

The browser in the server (the server browser) loads and renders HTML, CSS, JavaScript, etc. and takes away the risks from the client. The server browser then may transmit an internal representation of the web site to the browser of the client (the client browser) over the internet. The client may then use this internal representation and display the web site as if the client browser itself would have rendered the web site.

However, the client browser does not directly access the web site and does not directly load the source code of the web site. Neither does the client browser render the source code or execute JavaScript of the web site. Thus, the potential security risk of attacks via the browser decreases. Furthermore, privacy of the client is protected as it is not possible to effectively track a single users surfing behavior.

The present invention therefore provides a computer implemented method for securely accessing web pages, the method may comprise: transmitting from a client browser a request for retrieving a web page; receiving the request from the client browser by a server browser; gathering, by the server browser, a source code and one or more embedded objects of the requested web page, wherein the one or more embedded objects are gathered only if the web page comprises at least one or more embedded objects; rendering, by the server browser, the source code of the web page and generating a DOM, document object model, tree for creating a first visual representation of the web page, wherein the first visual representation comprises the DOM tree and said embedded objects; and transmitting said DOM tree and said embedded objects of the web page from the server browser to the client browser, so that the client browser is able to create a second visual representation of the webpage, wherein the second visual representation is substantially the same as the first visual representation.

The present invention may further provide a remote server device adapted to enable securely accessing web pages, the remote server device may comprise: a secure environment for initiating and executing applications; and a server browser being executed in the secure environment, the server browser may be adapted to: receive a request for retrieving a web page from the client browser; gather a source code and one or more embedded objects of the requested web page, wherein the one or more embedded objects are gathered only if the web page comprises at least one or more embedded objects; render the source code of the web page and generating a DOM, document object model, tree for creating a first visual representation of the web page, wherein the first visual representation comprises the DOM tree and said embedded objects; and transmit said DOM tree and said embedded objects of the web page to the client browser, so that the client browser is able to create a second visual representation of the webpage, wherein the second visual representation is substantially the same as the first visual representation.

### BRIEF SUMMARY OF THE DRAWINGS

These and other objects and features of the present invention will be more fully disclosed by the following detailed description of the preferred embodiments of the invention, which is to be considered together with the accompanying drawings, wherein:
FIG. 1 is a block diagram of a client computer accessing the internet via its provider;
FIG. 2 is a block diagram, illustrating browser internal processes of loading and rendering a web site;
FIG. 3 is a block diagram, illustrating the interaction between a client browser and a server browser in a remote server;
FIG. 4 is a block diagram, illustrating the browser interaction between the client browser and the server browser;
FIG. 5 is a block diagram for illustrating a possible position of the remote server, according to one exemplary embodiment of the present invention; and
FIG. 6 is a block diagram for illustrating a possible alternative position of the remote server, according to another exemplary embodiment of the present invention.

### DETAILED DESCRIPTION

Reference will now be made in detail to the exemplary embodiments, examples of which are illustrated in the accompanying drawings, wherein like reference numerals refer to like elements throughout.

Notably, even when the term "personal computer" is used in the following specification, the embodiments herein are not limited to a classical desktop PC. Other computing systems may be used in the different embodiments through out this description. In other words, a personal computer according to the present invention may also comprise a Mac, a Windows PC, a Linux system, a server, a mobile phone, a tablet and other mobile devices, but also all other devices that may access the Internet, such as TVs, DVD players, Blu-ray players, video recorders, set-top boxes, multimedia stations, navigation systems intelligent watches etc.

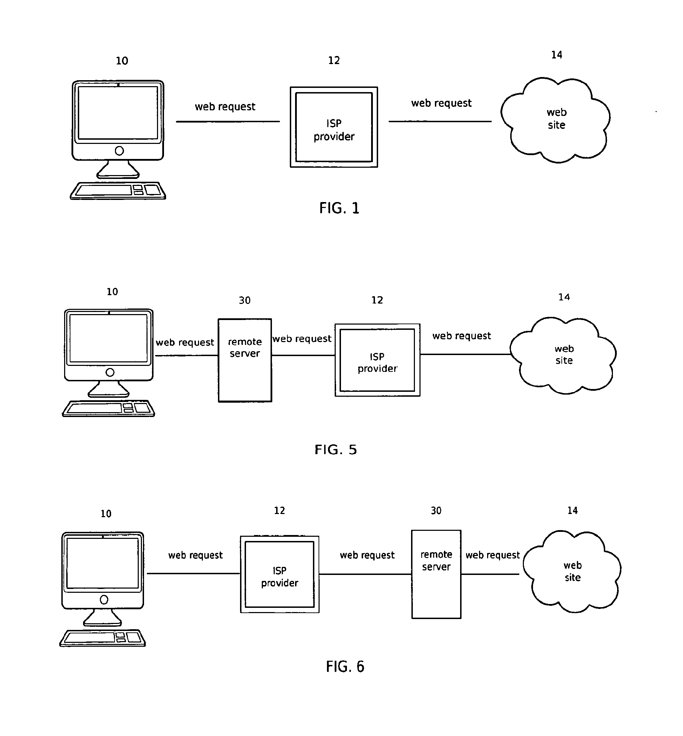

With regard to FIG. 1, a scenario is shown, where a personal computer 10 requests a provider 12 for a web site 14. In this case, the user of the personal computer 10 uses the browser for accessing the Internet and request for a domain name, such as www.example.org. This request is transmitted from the personal computer 10 to the provider 12 to find out the IP address associated with the requested web site 14. Thereafter, the provider 12 routes the requests to the server comprising the web site 14.

When the personal computer 10 is then "connected" with the website 14, the browser of the personal computer 10 then starts to download the contents of the website 14. The contents in such case may be HTML, JavaScript, images, style sheets (CSS) and other HTML objects for properly displaying the website 14. However, not only regular contents for displaying the website 14 may be downloaded, but also Trojans, spyware or other malicious software may be loaded onto the personal computer 10 while rendering the downloaded website. This can happen through stack overflow exceptions, bugs in the runtime environment or sandboxes, invalid process permissions, built-in backdoors, or any other types of malicious code or security holes contained in modern web browsers.

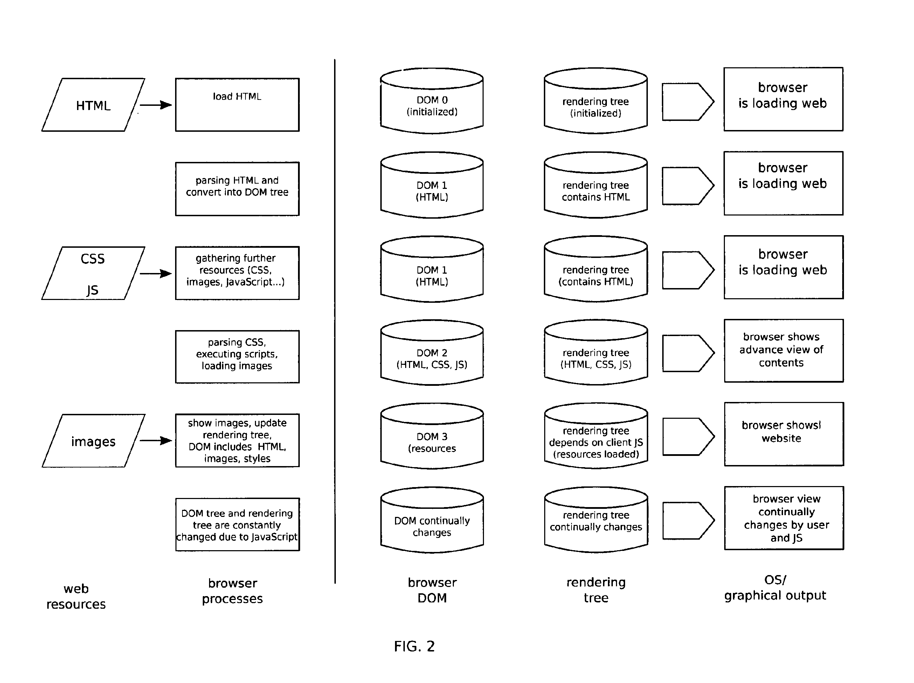

FIG. 2 shows a standard process of rendering a websites via a web browser. Notably, the processes shown in FIG. 2 may be in a different order or may be concurrently. The order of processes is not limiting to the embodiments. As can be seen, loaded HTML is parsed and converted into a document object model (DOM) tree. A DOM tree comprises different DOM nodes (or DOM objects) that define a relationship between different embedded objects (e.g., JavaScript, images, canvas, etc.) within the webpage. The browser is thus in its first DOM state, where the HTML is converted into the DOM tree. Further resources, such as CSS and JavaScript, are then loaded. On the basis of the DOM tree by using the CSS and JavaScript, transformations on the websites are then applied at runtime in order to generate a rendering tree. The rendering tree is stored in the memory of web browsers and it contains all information necessary for the layout in the webpage. For example, the rendering tree may comprise the DOM tree, a CSS style and information about the layout of the web site. In other words, the rendering tree provides an internal visual representation of the webpage and specifies how the website is to be displayed on a screen of the personal computer 10.

After further embedded objects, such as images, are loaded from the website, scripts are executed and the DOM tree and the rendering tree are changed to properly display the complete website within the browser. In modern web browsers JavaScript, HTML5 and other dynamic web-technologies constantly change the DOM of websites. This can happen due to Website requests (AJAX), user interaction (mouse, keyboard), JavaScript timers, or other reasons.

For example, when a user interacts with the website, the DOM tree may change, such that new DOM nodes may be generated by clicking in a link comprising JavaScript, or windows may be closed etc.

This results in a complete rendering of the website by parsing the rendering tree and creating native UI elements which are then sent to the window system. During the users browsing on the website, the DOM continually changes which results in a continually changed rendering tree and accordingly in a continually changed browser view.

The scenario above describes commonly used concepts comprising many security problems. Very critical steps in the above concepts are for example the executing of scripts (JavaScript), the interpretation of stylesheets (CSS), the loading of images and HTML and more commonly, the connection between browser and web resource itself. By executing HTML in a browser and by generating a DOM tree and a rendering tree, a plurality of resources are loaded and interpreted, which may be able to exploit security leaks. Since for example malicious software may thereby be loaded onto the computer. JavaScript, external plug-ins, images and CSS are major security issues for a personal computer and easily allow hackers to access the personal computer.

To overcome such security leaks, in an exemplary embodiment, the loading and executing of HTML, JavaScript, CSS and other resources and the creating of the DOM tree and the rendering tree may not be executed on a users host, but on a server in a secure, isolated environment.

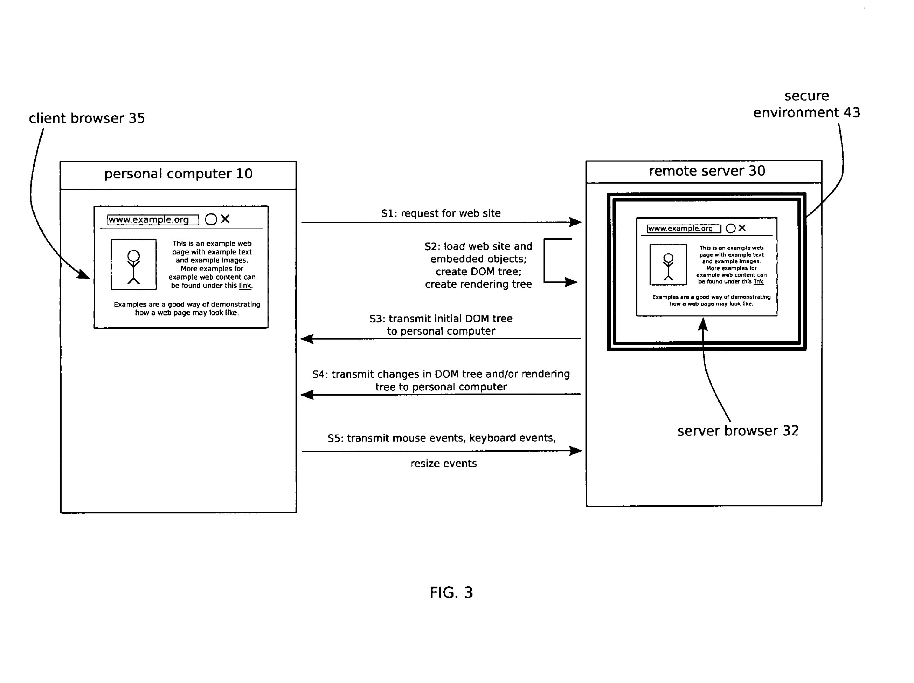

An exemplary embodiment of such a secure environment is illustrated in FIG. 3. As can be seen in FIG. 3, the personal computer 10 requests via its client browser 35 for a website in step S1, wherein the request is received by a remote server 30. Notably, the client browser is any regular browser that may be used by a user of the client. The client browser is a browser on the client's computer system. In other words, the client browser 35 may be any regular browser used on a personal computer 10, such as Chrome, Safari, Firefox, Opera, Internet Explorer or other modern browsers. In the herein described embodiments, no extra modifications of the client browser 35 may be necessary. However, in other exemplary embodiments, the client browser 35 may be modified in a way, so that the client browser 35 automatically accesses the Internet via the server browser 30 when the client browser 35 is used to download a website.

In another embodiment, a user of the personal computer 10 may first browse to a website of the remote server 30, where the user may be presented a web interface for entering the web address of a desired website. The remote server 30 comprises one or more secure environments 43 in which a set of browsers 32 may be executed. The secure environment 43 may be for example a virtual machine (herein also referred to as a "sandbox"). Any malicious software or any attacks from the outside via the Internet may only be present or may occur within the secure environment for the street of the remote server 30.

In another embodiment, an intermediate network router automatically redirects web-requests generated by the client-browser via the server browser.

In another embodiment, the server/system is set as proxy server inside the client browser's configuration.

In still another embodiment, the remote server 30 is set as a startpage/homepage in the client-browser's configuration.

Notably, the server browser 32 is a browser on the remote server 30. More particularly, the remote server 30 may comprise in its secure environment(s) 43 any possible version of any commonly used browser. According to the type of the client browser 35, the server 30 initiates, in a secure environment 43, the start of the same type of browser as the server browser 32. For example, if the client browser 32 is a specific version of Chrome, the server browser may likewise be the same (or the closest) version of Chrome. However, in other embodiments, one browser is started on the remote server 30, independent from the client browser 35.

Notably, the server browser 32 may be a web browser engine, such as Blink (Chrome), Webkit (Safari), Gecko (Firefox), Trident (Internet Explorer) or the like. Alternatively, the server browser 32 may be a headless web browser, such as PhantomJS or ZombieJS, or the server browser 32 may be a normal modified web browser. In the embodiments hereinafter, the server browser 32 is preferably a web browser engine, however, the embodiments are not limited to a web browser engine.

After the remote server 30 receives the request for the website, the server browser 32 then loads the requested website with its embedded objects (JavaScript, images, CSS, HTML5 objects etc.) in step S2. More particularly, the source code (e.g., HTML) and the embedded objects of the requested web site are gathered. Embedded objects of course are only loaded or gathered, if the website contains embedded objects. At runtime, the server browser 32 may render the HTML, render the CSS and JavaScript and may also create the DOM tree and the rendering tree, as will be discussed in more detail below.

After the server browser 32 has successfully rendered the HTML and created the DOM tree and the rendering tree, the server browser 32 transmits the DOM tree and embedded objects from the remote server 32 the client browser 35 of the personal computer 10 in step S2. In some embodiments, the server browser 32 may only transmit the initial DOM tree along with embedded objects, such as images and CSS.

For example, during run time, the remote server 30 may request the client browser 35 for its display resolution in order to properly create and modify the initial DOM tree. Notably, by resizing a browser window or by rotating a mobile device, the display resolution may change over time. As the display resolution of the personal computer 10 may change during use, such changes may be transmitted to the remote server 30 during runtime and the remote server 30 may consider such changes in its DOM tree and its rendering tree. This allows a dynamically adapting of the rendering tree on the remote server 30, as well as on the personal computer 10.

In alternative embodiments, the server browser 32 may also transmit its generated rendering tree, and encoded objects derived thereof, to the client browser 35. The client browser 35 may inject the rendering objects into the client browser's rendering tree directly or transform the rendering tree objects to DOM objects and inject them into the DOM.

In one embodiment, the DOM tree is transmitted and in another embodiment, the rendering tree - or derivatives thereof - is transmitted. When the rendering tree is transmitted, the respective objects will have to be injected into the DOM tree of the client browser 35. This means that the server browser 32 may intercept calls to its rendering tree and encodes the rendering tree objects and their derivatives before transmitting them to the client browser 35. The client browser 35 may then transform these objects and may then be able to display the web page. Alternatively, the rendering tree objects may be transformed into DOM objects on the remote server 30, which can then be transmitted to the client browser 35. The client browser 35 may then directly inject the DOM objects into the DOM tree. When the DOM tree is transmitted, DOM objects are transmitted.

After the client browser 35 receives the DOM tree and the embedded objects, the client browser 35 may then use the DOM tree and the received embedded objects from the server browser 32 in order to create its own visual representation of the website. In other words, the client browser 35 uses the received DOM tree and the embedded objects to build its own rendering tree which is substantially similar to the rendering tree of the server browser 32.

The rendering tree of the client browser 35 may then be transmitted to the graphical interface of the operating system in order to consume the webpage via a display of the personal computer 10. In this manner, web sites are no longer interpreted at the client browser 35, but in a secure environment 43 on a remote server 30. Thus, no malicious software is able to attack the client browser 35 directly. Further, web sites are no longer able to gather information about the client browser 35 and the personal computer 10. This allows an anonymously web browsing experience, as further discussed below.

Modern web applications change the DOM tree for example through JavaScript, AJAX and other technologies during runtime. Therefore, changes of the DOM tree (DOM objects) are streamed during runtime from the server browser 32 to the client browser 35. Thus, it is possible to update the visual representation of the displayed web sites in the client browser 35 within a very short time. Through continuous streaming of DOM objects during runtime, an optimized surfing speed is given.

This means that the rendering tree of the client browser 35 is practically synchronized with the rendering tree of the server browser 32. In this manner, a user experiences the same webpage as if the webpage would have been rendered by the client browser 35, itself.

When a user of the personal computer 10 uses the mouse or keyboards or other input devices in order to interact with the browser, mouse events, keyboard events and other input events are transmitted from the personal computer 10 to the remote server 30. For example, a user may click on a link within a displayed webpage. In response, according to one exemplary embodiment, an ID associated with the clicked link is transmitted from the client browser 35 to the server browser 32. The ID associated with links may for example comprise the actual web address, which is associated with the link. However, in alternative embodiments, the ID of a link may be and internal ID and the action or web address associated with that internal ID may only be known to the remote server 30. In alternative embodiments, the object handlers of links may be modified, and link actions are being forwarded to the server browser.

In case, the link comprises a JavaScript, the DOM tree of the server browser 32 in the remote server 30 changes. Accordingly, the rendering tree of the server browser 32 likewise changes. At the same time, this change of the DOM tree is transmitted to the client browser 35 within the personal computer 10. The client browser 35 may then utilize the received changes and update its rendering tree. In this regard, the rendering tree of the client browser 35 is synchronized with the rendering tree of the server browser 32 and thus, the two rendering trees are substantially similar.

On the other hand, if the clicked link accesses a new web page, the procedure starts over and the HTML of the new page is interpreted by the server browser 32 in the same manner.

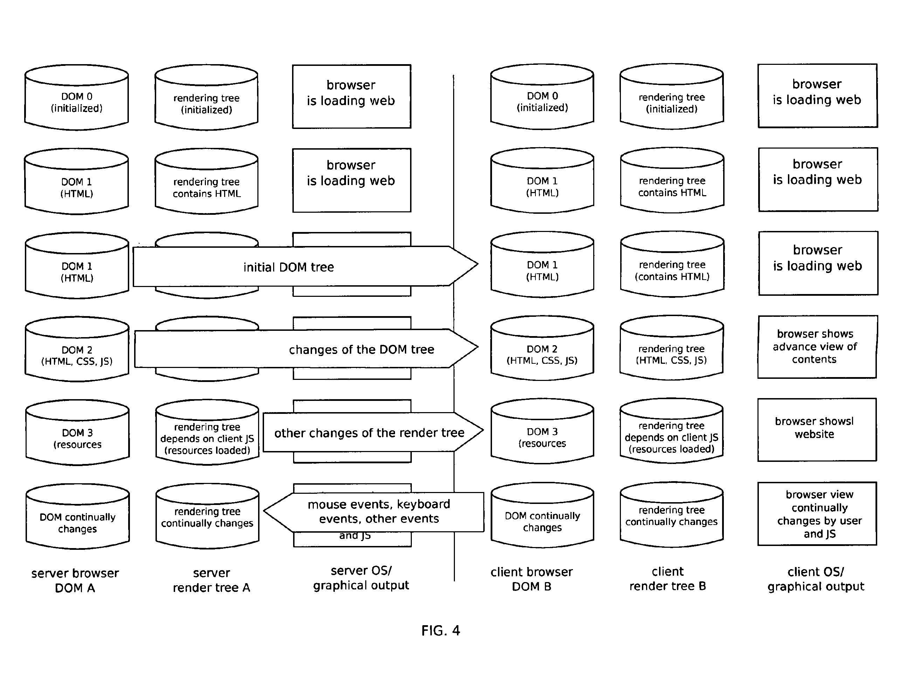

FIG. 4 is a block diagram, which illustrates the processes within the client browser 35 and the server browser 32, as discussed above. Notably, the arrows indicating the transmission of the DOM tree or changes of DOM or rendering tree are of illustrative nature only. In other embodiments, the arrows begin or end at other positions, for example instead of pointing from DOM tree A to DOM tree B, the arrows "changes of the DOM tree" may also point from DOM tree A to rendering tree B. As can be seen on the left side of FIG. 4, the server browser 32 loads a webpage in a manner as described with regard to FIG. 2. However, after the DOM tree within the server browser 32 has been created, and initial DOM tree is transmitted to the client browser 35.

Thereafter, when further embedded objects are loaded and interpreted by the server browser 32, changes of the DOM tree are transmitted to the client browser 35 so that the client browser 35 may generate its own visual representation of the website, i.e. its own version of the rendering tree.

Other changes of the rendering tree may also be transmitted from the server browser 32 to the client browser 35, such as changes by AJAX or loading of figures etc. thus, the internal representations of the two browsers are synchronized with each other so that the client browser 35 is able to generate the same (or substantially the same) rendering tree as server browser 32.

The synchronization between the two browsers can be initiated according to two different ways:

The first way is through virtual replication, as already discussed above. More particularly, the DOM tree, CSS, and images are transmitted from the server browser to the client browser 35 at runtime. In order to being properly rendered by the client browser 35, this information may first be optimized. This may comprise the resolution of the screen, available codecs (video, audio), fonts, and other modifications, which are specific to the type of the operating system and/or the browser used. The server browser 32 may select appropriate modifications based on the client browser specifications, user specific parameters, user behavior, regional settings or other relevant information.

In summary, the virtual replication may be explained by the following diagram:
server browser → (DOM, CSS, images) → client browser
client browser → (events of mouse/keyboard/others) → server browser.

The server browser 35 here is a modified version of a normal web browser that is able to transmit information required for generating a substantially similar rendering tree at another computing system. The client browser 35 merely is a common web browser, which uses JavaScript in order to implement the DOM changes received from the server browser 32.

Input events of mouse/keyboards or other input devices are transmitted from the client browser 35 to the server browser 32. The server browser 32 then executes these events accordingly and streams the resulting changes of the DOM, CSS, images, etc. back to the client browser 35.

The second way is through native browser-level replication by synchronization of instantiated UI objects (rendering tree objects) during runtime. For this, the server browser 32 may be manipulated so that it is possible to directly access the rendering tree within the server browser 32 at runtime. The different objects of the rendering tree are then synchronized from server browser 32 to client browser 35 and the rendering process is delayed according to requirements. Inside the server browser 32, calls to the rendering tree will be intercepted and propagated to both server browser's rendering tree and via transformation to the client browser as well. A streaming protocol will be used to transform and transport these calls/objects from server browser 32 to client browser 35. Objects derived from the rendering tree may be transformed to DOM objects on the remote server 30 or the client (e.g. personal computer 10).

In another embodiment, objects derived from the rendering tree will be injected via JavaScript functions on the client browser 35. A mapping table or logic might be used to create the appropriate DOM or HTML objects on the personal computer 10 to create a similar visual representation derived from the remote server's rendering-tree.

The server browser's rendering tree might be transformed to DOM objects on server or client. It might be transmitted in an arbitrary protocol and then injected into the client browser's DOM tree with appropriate functions/logic with the goal of creating a substantially similar visual representation.

In summary, the in-memory replication may be explained by the following diagram:
server browser → (changes in rendering tree) → client browser
client browser → (events of mouse/keyboard/others) → server browser.

The above two possibilities of synchronizing between the server browser 32 and the client browser 35 may be used together (in combination) or either alone. For example, changes in the DOM tree, images, CSS may be synchronized using the virtual replication method, whereas more complex embedded objects, such as canvas, may be synchronized using the in-memory replication. However, the present invention is not limited to these two kinds of synchronization and other synchronization techniques may be applicable.

Modifications of the server browser 35 may be necessary in order to effectively intercept changes in the server DOM tree, allowing a more efficient way of streaming of DOM and CSS. Furthermore, Flash must be treated properly, URIs need to be changed, web sessions needs to be properly allocated, SSL-connections need to be managed.

The server browser 35 may be modified to intercept calls to its internal representations - such as but not limited to DOM objects and rendering tree objects - and redirect one or more copies of such objects to the client browser 35. During this process such internal objects may be transformed. Examples of such modifications may be: transformation or URIs and links from absolute to relative URIs, transformation from external to internal URIs, modification of download links, modification of browser-internal download events, modification of action handlers, modification of JavaScript engine parameters, modifications of server browser's JavaScript engine, modification of keyboard- and mouse handlers, modification of keyboard- and mouse event listeners, modification of server browser's internal session storage, modification of server browser's internal local storage facility, transformation of image handlers, adjustment of the image loading process, interception and redirection of calls to browser plugins, addons and extensions. Furthermore browser-internal URI handlers, protocol handlers, supported protocols and related network settings may be modified inside the server browser.

Furthermore, the server browser 32 may be modified in order to display user interaction elements, such as popups, message- and dialog boxes, browser exceptions, SSL warnings, information about SSL certificates, browser extensions, browser settings inside the client browser. The client browser 35 may interact with the server browser 32 to create and display such interaction elements inside the client browser 35. However, the embodiments of the server browser 32 herein are not limited to the above modifications. Less or more modifications may be applied to the server browser 32.In the transport layer, browser specific abstractions are used in order to efficiently transmit the DOM, CSS, etc. via TCP/UDP according to a streaming protocol. In an exemplary embodiment, multiple streaming channels are used in order to optimize the speed of transmission. With this, server connections may be optimized and timeouts may be prevented, reciting in a higher transmission speed.

With regard to FIGS. 5 and 6, different possible positions of the remote server 30 are illustrated.

According to FIG. 5, the remote server 30 may be directly connected with the personal computer 10. For example, the remote server 30 may be part of a private network or of a company's network and all Internet activity from all personal computers within the private network is intercepted by the remote server 30. In this case, the remote server initiates a secure environment for these to be for each of the individual web sessions from a plurality of personal computers. This means that each personal computer (i.e. each web browser or even each tab in a web browser) has assigned its own secure environment 43 in the remote server 30. In exemplary embodiment, the remote server 30 may be the same computing device as the host computer 10 (not illustrated).

When the remote server 30 is part of the private network, the personal computer 10 transmits a request for a website to the remote server 30, which initiates a secure environment for the screen comprising the server browser 32. The server browser 32 then itself requests for the website at a provider 12, as discussed with regard to FIG 1.

In another embodiment, the remote server 30 is not part of a private network, but is a remote server accessible through the Internet. In this case, different types of connection are possible. In one case, the personal computer 10 may establish a peer to peer connection with the remote server 30, using the IP address of the remote server 30. The remote server 13 may in addition provide a web service and therefore may provide an interface for being connected to a personal computer 10.

In another embodiment, the remote server 30 may use other proxy servers, a mix network, VPN networks or similar services to connect to the web site 14.

According to FIG. 6, the remote server 13 is accessible through the Internet via a provider 12, which forwards requests for a website to the remote server 30. For example, a user of the personal computer 10 may open the website of the remote server 30. On this website, the user is able to enter a URL of a desired website. The remote server 30 then initiates a secure environment 43 comprising the server browser 32. The initiated server browser 32 then requests the desired website, as discussed with regard to FIG. 1.

However, the herein disclosed embodiments are not limited to the above-discussed cases and other locations of the remote server 30 may be possible.

In some embodiments the streaming protocol may also encrypt the data to be transmitted for more security. In one embodiment, an asymmetric encryption scheme may be used, where the remote server 30 transmits all data to be transmitted with the public key of the personal computer 10. For decrypting the encrypted data, the private key of the personal computer 10 is required, which is only known to the personal computer 10. On the other way around, all requests and data transmitted from the personal computer 10 to the remote server 30 are encrypted by the personal computer 10 using the public key of the remote server 30. Then, only the remote server 30 may decrypt the encrypted information, using its private key.

In another embodiment, one or multiple temporary session keys might be used. A Diffie-Hellman-Merkle, or similar, public-key based encryption scheme might be used to create the temporary session keys.

In another embodiment, a symmetric encryption scheme may be used with private keys for encryption and decryption, where the personal computer 10 and the remote server 30 share one identical private key. For the step of sharing of the private key, an asymmetric encryption scheme may be used, where the initial transmission of the private key may be encrypted with the public key of the other entity. However, the herein described embodiments are not limited to one particular encryption scheme and other encryption schemes may also be used either alone, or in combination with other encryption schemes. Nowadays, hackers are able to identify individual users with reference to their specific mouse movements or their specific way of typing. Hackers may use JavaScript to track mouse movements or mouse inputs or keyboard inputs over a certain period. It is then possible for a hacker to identify individual persons, using statistical methods. Thus, in order to further increase the security level of a web session, keyboard inputs and mouse events may be delayed or randomized before transmitted from the client browser 35 to the server browser 32. Alternatively, the input events may be randomized and/or delayed in the server browser before being transmitted to a server.

This procedure of delaying and/or randomizing user inputs effectively allows a user to surf anonymously. For example, since the remote server 30 executes a huge number of client requests per second, it is not easily possible to reconstruct which clients has accessed which website.

The herein described embodiments provide certain advantages over commonly used techniques in the prior art. For example, unlike proxy services, no direct rendering of HTMUCSS/JavaScript is performed in the client browser 32. Therefore, a huge number of possible scenarios of different attacks are impossible. Furthermore, JavaScript may still be used in a safe manner. Current web-, mix-, onion- or VPN based proxy-solutions execute JavaScript on the client resulting in a decreased security level.

Further, unlike terminal server or remote desktop solutions, the herein disclosed embodiments are much faster. In particular, the herein disclosed embodiments may also be faster than "normal" web browsing. The server 30 may be used to optimize HTML, CSS and/or JS. In addition, large images may be cropped, compressed or down sampled before transmitted to the user. Thus, devices with a slow Internet connection may browse much faster using the remote server 30 with its server browser 32.

In some embodiments, the client browser 35 will contain its own printing feature. JavaScript will be used to print web sites from inside the client browser.

In some embodiments, cookies may be imported from the client's personal computer 10 to the remote server 30.

Some embodiments may include a facility for storing and retrieving bookmarks on the user profile of the server. This facility may allow users to access their bookmarks across devices. A bookmark server may be attached to the described system to store and retrieve bookmarks.

In some embodiments, a browser plugin may be used to configure the connection from client browser 35 to the server browser 32. In such case, a user does not need to manually set-up a remote browser system.

In other embodiments, the remote browser system might be installed as custom search engine.

In some embodiments, the client browser 35 may be compiled or configured to be used together with server browser 32 by default.

In some embodiments, the remote browser 32 may be installed on the same computer as the client browser 32. In such case, the server browser 32 might use a proxy service, VPN, mix network or similar to connect to website 14.

In some embodiments, downloads via server browser 32 may be scanned with a malware detection software.

In some embodiments, downloads via server browser 32 may be stored on external online services.

In some embodiments, server-browser can filter, block, modify or extend content derived from website 14 or connected pages.

In some embodiments, server browser might be integrated with Directory servers to authenticate users.

In some embodiments, domains or features might be black- or whitelisted depending on user permissions.

## Claims

1. A computer implemented method for securely accessing web pages, the method comprising:
transmitting from a client browser (35) a request for retrieving a web page;
receiving the request from the client browser by a server browser (32);
gathering, by the server browser, a source code and one or more embedded objects of the requested web page, wherein the one or more embedded objects are gathered only if the web page comprises at least one or more embedded objects;
rendering, by the server browser, the source code of the web page and generating a DOM, document object model, tree for creating a first visual representation of the web page, wherein the first visual representation comprises the DOM tree and said embedded objects; and
transmitting said DOM tree and said embedded objects of the web page from the server browser to the client browser, so that the client browser is able to create a second visual representation of the webpage, wherein the second visual representation is substantially the same as the first visual representation.

2. The computer implemented method of claim 1, further comprising synchronizing the client browser (35) with the server browser (32), wherein synchronizing comprises:
tracking changes of the web page by the server browser;
updating the DOM tree by updating respective DOM nodes; and
dynamically streaming updated DOM nodes or updated rendering tree objects or
derivatives thereof to the client browser.

3. The computer implemented method of claim 2, further comprising streaming updated embedded objects to the client browser.

4. The computer implemented method of any one of claims 1 to 3, wherein said embedded objects comprise at least one of JavaScript, CSS, one or more images, canvas and other HTML or browser objects.

5. The computer implemented method of any one of claims 1 to 4, wherein the server browser (32) is executed in an isolated sandbox environment (43) on a same computer device (10) as the client browser (32) or on a computer device (30) that is distinct from the computer device where the client browser is executed.

6. The computer implemented method of any one of claims 1 to 5, further comprising delaying user inputs and inserting randomized inputs of one or more user input devices.

7. The computer implemented method of any one of claims 1 to 7, wherein a streaming protocol is used for transmitting data between the server browser (32) to the client browser (35).

8. A remote server device adapted to enable securely accessing web pages, the remote server device comprising:
a secure environment for initiating and executing applications; and
a server browser (32) being executed in the secure environment, the server browser being adapted to:
receiving a request for retrieving a web page from the client browser (35);
gathering a source code and one or more embedded objects of the requested web page, wherein the one or more embedded objects are gathered only if the web page comprises at least one or more embedded objects;
rendering the source code of the web page and generating a DOM, document object model, tree for creating a first visual representation of the web page,
wherein the first visual representation comprises the DOM tree and said embedded objects; and
transmitting said DOM tree and said embedded objects of the web page to the client browser, so that the client browser is able to create a second visual representation of the webpage, wherein the second visual representation is substantially the same as the first visual representation.

9. The remote server device of claim 8, wherein the server browser (32) is further adapted to synchronize the client browser (35) with the server browser, wherein synchronizing comprises:
tracking changes of the web page;
updating the DOM tree by updating respective DOM nodes; and
dynamically streaming updated DOM nodes to the client browser (35).

10. The remote server device of claim 9, wherein the server browser is further adapted to stream updated embedded objects to the client browser (35).

11. The remote server device of any one of claims 8 to 10, wherein said embedded objects comprise at least one of JavaScript, CSS, one or more images, canvas and other HTML or browser objects.

12. The remote server device of any one of claims 8 to 11, wherein the secure environment is an isolated sandbox environment (43) on a same computer device (10) as the client browser (35) or on a computer device (30) that is distinct from the computer device where the client browser is executed.

13. The remote server device of any one of claims 8 to 12, wherein the server browser (32) is further adapted to delay user inputs and insert randomized inputs of one or more user input devices.

14. The remote server device of any one of claims 8 to 13, wherein a streaming protocol is used for transmitting data between the server browser (32) to the client browser (35).

15. The remote server device of any of claims 8 to 14, wherein one or more proxy servers, mix nodes or onion servers are used to connect from the server browser (32) to the web site (14).
